# EUROPEAN PATENT APPLICATION

(11) **EP 0 991 290 A2**
(43) Date of publication of application: **05.04.2000**
(21) Application number: 99119210.5
(22) Date of filing: 28.09.1999
(51) Int. Cl.: H04Q 7/32

(54) **Portable or mobile radio and method of loading data into a radio**

(30) Priority: 29.09.1998 GB 9821069
(71) Applicant: MOTOROLA GmbH, 65232 Taunusstein (DE)
(72) Inventor: Tetz, Klaus Martin, 65232 Taunusstein (DE); Lehr, Bernd Jurgen, 65557 Huenfelden-Heringen (DE)
(74) Representative: Potts, Susan Patricia

(57) **Abstract**

The invention concerns a portable- or a mobile radio 110, a method of loading data into a radio and a method of updating data in a radio.

The blocks of data (350, 360, 370, 450, 460, 470) in the codeplug 112 of the radio 110 are structured such that data first incorporated in the codeplug of the present version of the radio is stored separately from data first incorporated in the corresponding block of data in the codeplug of an earlier version of the radio. This sub-division enables a Radio Service Software (RSS) to download data from the codeplug, manipulate parts of the data which it can recognise and return unrecognised data (454) to the codeplug unchanged. The invention provides a codeplug 112 which is 'backwards compatible' with old versions of the RSS.

The codeplug 112 may also contain information (352, 452) about the size and/or structure of the blocks of data in the codeplug. The RSS can use this information as an 'index' to the codeplug's contents.

The invention also encompasses a method of loading data into the codeplug 112, and a method (230, 232) of updating data in the codeplug.

## Description

### Technical Field

The invention concerns a portable- or a mobile radio. The invention also concerns a method of loading data into such a radio.

### Background

Portable or mobile radios, henceforth 'radios', facilitate two-way communication between their users. These radios usually contain programmable memory elements. Such programmable memory elements may contain data about the radio model and/or specific data relating to that individual radio unit. This data typically relates, for example, to the channel frequencies on which the radio may operate. Such data is stored in a part of the radio called the 'codeplug'. The 'codeplug' is a specific area of memory, often consisting of Programmable Read-Only Memory (ROM), which can be over-written, i.e. reprogrammed.

A portable computer (PC) can be used to change the programmable data of the radio. The user of the radio usually takes the radio to a radio dealer to do this, and might typically require the dealer to programme new radio channels into the radio's codeplug. The PC needs a specific piece of software to change the data in the radio. This software is called the Radio Service Software, or 'RSS'.

In order to change the programmable data of the radio, the data needs to be read into the PC from the radio. Before the RSS gets access to the data stored in the radio's codeplug, the radio model number and the version of the data storage in the radio need to be checked by the RSS. The version of the data storage is critical to this checking. In practice, the RSS held by a particular dealer may be older than the radio which the user wants to reprogram, and the version of the data storage in the radio may well be too recent for the RSS to recognise it.

The codeplug version number is in fact changed whenever a new programmable feature is available for the radio. Usually this means that newly manufactured radios are given the new codeplug version number, which distinguishes them from radios manufactured prior to introduction of the new feature. When such a new feature becomes available, the structure of the codeplug is also changed. This will happen several times during the product life-cycle. This means that a newly built radio often cannot be used with an old RSS version held by a dealer. Likewise, a radio which has been up-dated in mid-life may not be serviceable by a version of the RSS that could be used with that radio when it was new. In short, changes to a codeplug can usually not be foreseen by the RSS.

When an RSS detects a newer, un-supported, version of the codeplug, the data in the connected radio can't be read out. Therefore the data in the radio cannot be reprogrammed by this RSS. This is even the case when the features which the user wants to change relate only to those features which are otherwise programmable with this version of the RSS, e.g. they are features of the codeplug which were already used in the radio prior to the mid-life update which caused the change to the codeplug version number, and are not themselves features unknown to that version of the RSS.

Throughout this document, the word 'codeplug' takes the meaning of an area of memory in the radio, as explained above. 'Codeplug' does not take its colloquial meaning of an electrical connector inserted into the radio for the purpose of programming data into the radio.

### Summary of the Invention

A portable- or a mobile radio in accordance with the invention comprises a codeplug, whereirn:
the codeplug stores blocks of data relating to the radio model and/or blocks of data relating specifically to that individual radio unit;
one or more of the blocks of data in the codeplug contains both data first incorporated in the codeplug of the present version of the radio, and data first incorporated in a corresponding block of data in the codeplug of an earlier version of the radio;
the said one or more blocks of data are structured such that data first incorporated in the codeplug of the present version of the radio is stored separately from data first incorporated in the corresponding block of data in the codeplug of the earlier version of the radio; and
the codeplug contains information about the size and/or structure of at least one of the blocks of data in the codeplug.

Also in accordance with the present invention, a method of loading data into the codeplug of a portable- or a mobile radio, comprises the steps of:
loading into the codeplug blocks of data relating to the radio model and/or loading into the codeplug blocks of data relating specifically to that individual radio unit, one or more of the blocks of data loaded into the codeplug containing both data first incorporated in the codeplug of the present version of the radio, and data first incorporated in a corresponding block of data in the codeplug of an earlier version of the radio;
structuring the said one or more blocks of data such that the data first incorporated in the codeplug of the present version of the radio is stored separately from the data first incorporated in the corresponding block of data in the codeplug of the earlier version of the radio; and
loading into the codeplug information about the size and/or structure of at least one of the blocks of data in the codeplug.

Further in accordance with the present invention, a method of updating data in the codeplug of a portable- or a mobile radio by means of a software program in a computer external to the radio, comprises the steps of:
determining the codeplug version number;
deciding whether or not the software program fully supports the codeplug with the determined version number, and either:
   (a) if the software program fully supports the codeplug with the determined version number, then in sequence:
      (i) downloading the data from the codeplug to the computer;
      (ii) updating the data from the codeplug;
      (ii) uploading the updated data into the codeplug from the computer, or,
   (b) if the software program cannot fully support the codeplug with the determined version number then in sequence:
      (i) downloading the data from the codeplug to the computer;
      (ii) updating those blocks or sub-blocks of the downloaded data recognised by the software program, whilst leaving unrecognised blocks or sub-blocks of data unchanged;
      (iii) uploading both the updated blocks or sub-blocks of data and the unchanged blocks or sub-blocks of data into the codeplug from the computer.

### Brief Description of the Figures

Figure 1 illustrates the main elements of a portable radio.
Figure 2 illustrates a portable radio connected, in accordance with one embodiment of the method of the present invention, to a portable computer.
Figure 3 illustrates the layout of a codeplug of a radio.
Figure 4 illustrates the layout of one form of a codeplug in accordance with the present invention.

### Detailed Description of the Invention

The present invention relates to a method and a device for overcoming the problem of an incompatible portable- or mobile radio and Radio Service Software (RSS). Particularly, the invention enhances the compatibility between different versions of the RSS and of the radio. Such compatibility is not assured by arrangements of the prior art when the RSS and radio date from different times.

A codeplug is located within a portable- or a mobile radio. The codeplug can consist of Electrically-Erasable Programmable Read-Only Memory (EEPROM). An EEPROM memory element will normally be used as Read-Only Memory (ROM) in everyday use. However, the contents of the EEPROM can be erased and new data entered a number of times. Such a memory is ideal for the demands on a codeplug of a radio.

An EEPROM codeplug can be loaded with data relating to the radio model and/or data relating specifically to that individual radio unit. The data is divided into blocks, e.g. a block of data about the features of the radio model, or a block of data about the channels on which that particular radio unit may transmit and receive.

One or more of the blocks of data in the codeplug can contain both data first incorporated in the codeplug of the present version of the radio, and data first incorporated in a corresponding block of data in the codeplug of an earlier version of the radio.

In accordance with one embodiment of the invention, these one or more blocks of data are structured such that data first incorporated in the codeplug of the present version of the radio is stored separately from data first incorporated in the corresponding block of data in the codeplug of the earlier version of the radio. This means that one or more of the blocks of data has been sub-divided, and can be considered to consist of 'sub-blocks' of data. One part of a sub-divided block contains data relating to new or different features used first in this generation of radios or in this particular radio unit. Another part of the block may contain data which has been used in an older generation of radios.

There are advantages in a partitioned or 'modular' construction of the block of data. For instance, this allows re-use of a whole block of data from an old version of a radio when designing a new version of a radio.

Clearly, not all of the blocks of data in the codeplug need to be subdivided. Some may simply contain one kind of data, such as data which has been used in its entirety in an earlier version of the radio and is being used in a new version of the radio without alteration or having been added to. Likewise, a new version of a radio may have some blocks of data which are entirely new, there being no similar or corresponding block of data in earlier versions of the radio.

The sub-division of the data within the block of data maybe achieved simply by using one numerical range of addresses for one kind of data, and another range of addresses for data of the other kind. In the one or more sub-divided blocks of data, the data first incorporated in the codeplug of the present version of the radio may for example be stored in locations sequentially following data first incorporated in the corresponding block of data in the codeplug of the earlier version of the radio.

The codeplug in accordance with the invention also contains information about the size and/or structure of at least one of the blocks of data in the codeplug. This can be a simple indication that certain of the blocks are subdivided. This indication can state where the subdivision of each block occurs, and which kind of data is stored in each of the parts of the block. This information could identify blocks which have been re-used unchanged from earlier versions of the radio, and/or blocks of data which are completely new and have no counterpart at all in earlier versions of the radio.

The information about the size and/or structure of at least one block of data in the codeplug may be updateable. This allows this information to be changed, for example when the radio is provided with new data during an update by a dealer using an RSS. The information about the size and/or structure of at least one block of data can be used by an RSS as a form of 'indexing' of the contents of the codeplug. This allows the RSS to recognise very quickly what is in the codeplug, and particularly to see how large the block or blocks of data concerned are.

Furthermore, the codeplug may contain information about the size and/or structure of all the blocks of data in the codeplug. This allows an RSS to know about the entire set of data blocks in the codeplug when interrogating the radio. This is advantageous in allowing the RSS to know, for example, how much memory to set aside for all the data which it will download from the codeplug.

The radio described above permits a dealer to perform updates even with versions of the RSS which pre-date the radio. This is because the RSS can easily recognise which parts of the blocks of data in the codeplug it can change, and which ones it is not able to update. The clear subdivision of data within data blocks facilitates this. In versions of the radio which contain entirely new blocks of data, the information in the codeplug indicating this fact can also be used by the RSS to identify entire blocks of data which it is not able to update.

The invention also encompasses a method of updating data in the codeplug of a portable- or a mobile radio by means of a software program in a computer external to the radio. In particular, the invention allows an RSS in a computer held by a radio dealer to interrogate the codeplug of a portable- or a mobile radio, with the aim of updating data in the codeplug of the radio.

To do this, the radio is firstly connected to the computer. This may be by cable, but could also be by infra-red link, by radio link or by insertion of the radio into a port of the computer. The RSS program in the computer then determines the codeplug version number of the radio.

The RSS can recognise from the codeplug version number whether or not it can fully support that version of the radio. A radio manufactured at the same time as the RSS should be completely 'transparent' to the RSS, with the RSS able to download and manipulate data relating to all features of the radio.

However, a radio may have been manufactured some time, possibly years, after the RSS held by the dealer. Alternatively, the radio may have been re-configured, since its manufacture, by a more modern RSS than that held by the dealer. In either of these cases the radio may have features or data which the dealers RSS was not designed to work with, and cannot recognise. In accordance with the invention, the RSS is able to recognise that this is the case and act accordingly. Importantly, the RSS is not prevented entirely from making changes to such a radio.

In accordance with the invention, the RSS decides whether or not it can fully support the codeplug with the determined version number. If it can fully support this codeplug, then the RSS performs the steps of, in sequence:
(i) downloading the data from the codeplug to the computer;
(ii) updating the data from the codeplug;
(ii) uploading the updated data into the codeplug from the computer.

The step of updating the data from the codeplug may involve, for example, providing an extended list of channels which the radio may communicate over. Alternatively, the update may specify a new level of battery voltage or power level at which a 'battery low' or 'power low' warning light should be illuminated by the radio.

If however the RSS determines that it cannot fully support the codeplug with the determined version number, then it performs an alternative set of steps. In this case, the RSS performs the following steps in sequence:
(i) downloading the data from the codeplug to the computer;
(ii) updating those blocks or sub-blocks of the downloaded data recognised by the RSS, whilst leaving unrecognised blocks or sub-blocks of data unchanged;
(iii) uploading both the updated blocks or sub-blocks of data and the unchanged blocks or sub-blocks of data into the codeplug from the computer.

Here step (ii) consists of only altering blocks or parts of blocks of data which this version of the RSS can recognise. These might be the same kind of blocks of data about communication channels or voltage or power levels given in the example above. Critically however, the RSS also downloads intact blocks or sub-blocks of data which it is not designed to update, and which it does not recognise. These blocks or sub-blocks are not altered, but left intact. Such data might for example relate to a feature only present on radios manufactured long after the RSS was released to dealers.

The RSS may be assisted in deciding which blocks or sub-blocks of data it can recognise by means of information in the codeplug about the size and/or structure of at least one of the blocks of data in the codeplug. This allows the RSS to better recognise which blocks of data, or parts of blocks, it can potentially update, and which it cannot. This information therefore serves an 'index' to the contents of the codeplug. The RSS may however decide whether or not it can fully support the codeplug simply on the basis of whether or not it recognises the version number of the codeplug. An unknown version number indicates that the RSS predates the version of the radio which it is interrogating. In this case, the information in the codeplug about the size and/or structure of the blocks of data in the codeplug may now be used to decide which of the blocks or sub-blocks the RSS can update, and which ones it must download from the radio and leave intact.

Step (iii) foresees the return to the radio by the RSS of both the data which it has changed, and the data which the RSS downloaded but could not recognise.

As explained above, the invention allows a user to read out the data stored in a radio device, to change the data and to re-program it back into the radio, even if the RSS is not capable of changing the new features of the codeplug. This makes the radio 'backwards compatible' with older versions of the RSS software held by dealers.

The method of updating the data in the codeplug in accordance with the invention described above may further comprise the step of updating any indexing information in the codeplug about the size and/or structure of the blocks of data in the codeplug. This newly updated indexing information would then be available for reading by an RSS the next time that the radio was interrogated.

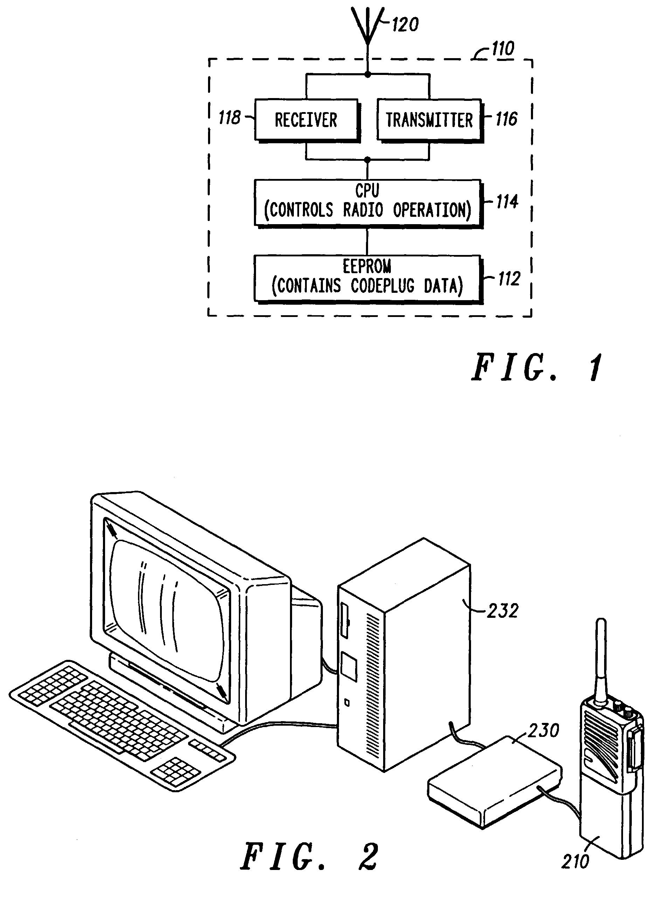

Figure 1 illustrates the main elements of a portable radio, 110. A mobile radio contains similar functional elements, but may differ in the size or power of some components or circuitry.

The radio itself includes the EEPROM memory 112. In accordance with the invention, the EEPROM 112 forms the codeplug of the radio. The CPU is shown as element 114, and is connected to the EEPROM 112.

Also connected to the CPU 114 are the transmit (Tx) circuit 116 and the receive (Rx) circuit 118. Both the Transmitter and Receiver units are connected to the Antenna 120 of the radio.

Figure 2 illustrates a portable radio 210 connected to a personal computer 232 in accordance with one embodiment of the method of the present invention.

The radio and computer may be linked by means of appropriate cabling and a Radio Interface Box 230.

The portable radio shown in figure 2 can be worked on in accordance with the method of the present invention explained above. The arrangement shown in figure 2 may apply for instance when the personal computer is located at a radio dealer's premises to which a radio is taken by the owner for an update.

The invention also encompasses a method of loading data into the codeplug of a portable- or a mobile radio. This method encompasses the following steps:
(i) Loading into the codeplug blocks of data relating to the radio model and/or loading into the codeplug blocks of data relating specifically to that individual radio unit, one or more of these blocks of data containing both data first incorporated in the codeplug of the present version of the radio and data first incorporated in a corresponding block of data in the codeplug of an earlier version of the radio.
(ii) Structuring the said one or more blocks of data such that the data first incorporated in the codeplug of the present version of the radio is stored separately from the data first incorporated in the corresponding block of data in the codeplug of the earlier version of the radio.
   The codeplug is thus partitioned. This allows easy recognition of which parts of a block of data are old, and which are new to this generation of the radio.
(iii) Loading into the codeplug information about the size and/or structure of at least one of the blocks of data in the codeplug. This information provides a form of 'indexing', which an RSS can use to determine the nature of the blocks of data in the codeplug when it interrogates the radio. Optionally, this information can be made updateable. In another optional step, the size and/or structural information may relate to all the blocks of data loaded into the codeplug.

Optionally, in the one or more blocks of data which contain 'old' and 'new' data, the data first incorporated in the codeplug of the present version of the radio may be stored in locations sequentially following data first incorporated in the corresponding block of data in the codeplug of the earlier version of the radio.

This method provides a codeplug which can be used immediately with old versions of the RSS software Although this method may preferably be performed at the time of manufacturing the radio, it could also be applied later, such as during a mid-life update of the radio.

### Example

An example of a radio and an RSS in accordance with the invention have been arranged to have the characteristics explained in points a)-e) of the following example.

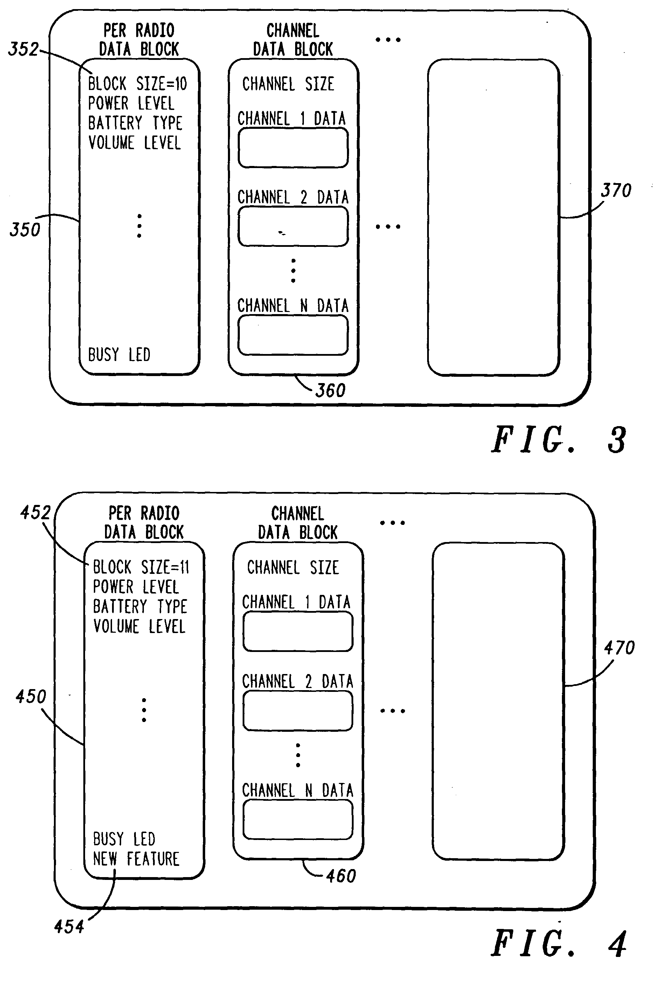

Figures 3 and 4 illustrate the layout of the codeplug of the radio in accordance with the example. In figure 3, the blocks of data are shown as elements 350, 360 and 370. The 'Per Radio Data Block' 350 contains an indicator of the size of the block. This is the line of data labelled 352 which reads 'Block Size =10'.

Figure 4 shows the codeplug of figure 3 following an update. In figure 4, blocks of data 450, 460 and 470 correspond to blocks 350, 360 and 370 in figure 3. Blocks 460 and 470 correspond exactly to blocks 360 and 370, as these blocks were not changed by the update. Block 450 however contains a new feature of the radio. This new feature has been indicated generically by the line of text 'New Feature' labelled 454.

Block 450 also shows a further difference over the arrangement of figure 3, in that the line of text labelled 452 now reads 'Block Size =11'. This 'index' to block 450 has been changed in comparison to the line 352 in block 350 to indicate to an RSS that block 450 is larger than block 350 was. Importantly, an RSS interrogating the radio can recognise that an alteration has been made to block 450 during the update, and that block 450 now contains additional data over that in the radio at the time of manufacture. The line of text labelled 452 indicates to the RSS both that the new feature is present and how much space to reserve for downloading the 'Per Radio Data Block' at the time of performing an update on the codeplug.

In detail in this example:
a) Every block of data in the codeplug is arranged to contain information about the size of the data block.
   This can be seen in figure 3, the section of the codeplug entitled 'Per Radio Data Block' having an entry 'Block Size=10'. This is an updateable index which tells an interrogating RSS how big the Per Radio Data Block in this particular radio is.
b) Whenever a new programmable feature is added to the codeplug, the data is stored at the end of the corresponding data block. Additionally, the size information is updated.
   This can be seen in Figure 4. The 'Per Radio Data Block' of Figure 4 has been updated by the addition of a 'New Feature', shown at the bottom of the block on Figure 4. Additionally, the block size indicator at the top of the block now reads 'Block Size=11'.
c) The RSS package handles the block sizes dynamically. If the size of a block is bigger than expected, the RSS provides more storage to read in the data.
d) All data which is known to the RSS version being used by the dealer is displayed on the user interface of the RSS. This data can then be changed.
e) The data relating to unknown features is held unchanged by the RSS. When the RSS programmes the radio at the end of the update, the data related to the unknown features is stored back in the codeplug as it was before.

In the method in accordance with this example, the RSS performs the following detailed steps:
1) The RSS first checks the version number of the radio's codeplug, and at this point will detect if it is a newer one than currently supported by that RSS.
2) A message is given to the user that the connected radio contains some new features which cannot be seen or changed by this RSS version.
3) The RSS starts reading the codeplug data block by block.
4) The RSS recognises that the size of the 'Per Radio Data Block' is one byte more than expected.
5) The RSS dynamically allocates one byte more of storage space and reads in the 'Per Radio Data Block'.
6) All the known data from the codeplug is shown on the user interface of the RSS. The user changes all the data which he wants to update.
7) The user programs the data back into the radio. The data unknown to the RSS remains unchanged throughout the operation.

## Claims

1. A portable- or a mobile radio comprising a codeplug, wherein:
the codeplug stores blocks of data relating to the radio model and/or blocks of data relating specifically to that individual radio unit;
one or more of the blocks of data in the codeplug contains both data first incorporated in the codeplug of the present version of the radio, and data first incorporated in a corresponding block of data in the codeplug of an earlier version of the radio;
the said one or more blocks of data are structured such that data first incorporated in the codeplug of the present version of the radio is stored separately from data first incorporated in the corresponding block of data in the codeplug of the earlier version of the radio; and
the codeplug contains information about the size and/or structure of at least one of the blocks of data in the codeplug.

2. A radio in accordance with claim 1 wherein, in said one or more blocks of data, the data first incorporated in the codeplug of the present version of the radio is stored in locations sequentially following data first incorporated in the corresponding block of data in the codeplug of the earlier version of the radio.

3. A radio in accordance with claim 1 or claim 2, wherein the information about the size and/or structure of the said at least one block of data in the codeplug is updateable.

4. A radio in accordance with any previous claim, wherein the codeplug contains indexing information about the size and/or structure of all the blocks of data in the codeplug.

5. A method of loading data into the codeplug of a portable- or a mobile radio, comprising the steps of:
loading into the codeplug blocks of data relating to the radio model and/or loading into the codeplug blocks of data relating specifically to that individual radio unit, one or more of the blocks of data loaded into the codeplug containing both data first incorporated in the codeplug of the present version of the radio, and data first incorporated in a corresponding block of data in the codeplug of an earlier version of the radio;
structuring the said one or more blocks of data such that the data first incorporated in the codeplug of the present version of the radio is stored separately from the data first incorporated in the corresponding block of data in the codeplug of the earlier version of the radio; and
loading into the codeplug information about the size and/or structure of at least one of the blocks of data in the codeplug.

6. A method in accordance with claim 5, wherein in said one or more blocks of data, the data first incorporated in the codeplug of the present version of the radio is stored in locations sequentially following data first incorporated in the corresponding block of data in the codeplug of the earlier version of the radio.

7. A method in accordance with claim 5 or claim 6, wherein the information about the size and/or structure of the said at least one block of data in the codeplug is updateable.

8. A method in accordance with any of claims 5-7, wherein indexing information about the size and/or structure of all the blocks of data in the codeplug is loaded into the codeplug.

9. A method of updating data in the codeplug of a portable- or a mobile radio by means of a software program in a computer external to the radio, comprising the steps of:
determining the codeplug version number;
deciding whether or not the software program fully supports the codeplug with the determined version number, and either:
(a) if the software program fully supports the codeplug with the determined version number, then in sequence:
(i) downloading the data from the codeplug to the computer;
(ii) updating the data from the codeplug;
(ii) uploading the updated data into the codeplug from the computer;
or,
(b) if the software program cannot fully support the codeplug with the determined version number, then in sequence:
(i) downloading the data from the codeplug to the computer;
(ii) updating those blocks or sub-blocks of the downloaded data recognised by the software program, whilst leaving unrecognised blocks or sub-blocks of data unchanged;
(iii) uploading both the updated blocks or sub-blocks of data and the unchanged blocks or sub-blocks of data into the codeplug from the computer.

10. The method of claim 9, further comprising the step of updating indexing information in the codeplug about the size and/or structure of the blocks of data in the codeplug.
